Europäisches Patentamt

European Patent Office

Office européen des brevets

(19)

(11) Publication number: **0 282 930**
**A2**

(12) # EUROPEAN PATENT APPLICATION

(21) Application number: **88103938.2**

(22) Date of filing: **12.03.88**

(51) Int. Cl.⁴: **G01N 27/90**

(30) Priority: **17.03.87 SE 8701082**

(43) Date of publication of application:
**21.09.88 Bulletin 88/38**

(84) Designated Contracting States:
**BE DE FR GB IT**

(71) Applicant: **Törnblom, Bengt Hjalmar**
**Vikhus Rytterne**
**S-725 90 Västeras(SE)**

(72) Inventor: **Törnblom, Bengt Hjalmar**
**Vikhus Rytterne**
**S-725 90 Västeras(SE)**

(74) Representative: **Boecker, Joachim, Dr.-Ing.**
**Rathenauplatz 2-8**
**D-6000 Frankfurt a.M. 1(DE)**

(54) **Method and device for phase-selective testing and/or measuring of test objects with eddy current techniques.**

(57) Method and device for phase-selective testing and/or measuring of test objects, such as hot steel billets, with eddy current techniques with respect to surface cracks or other magnitudes, whereby at least one signal, e.g. A sin ωt, derived from this magnitude is detected by means of at least one phase-sensitive detector The output signal from an ordinary phase-controlled rectifier can be substantially described via, e.g. sin α and/or cos α functions in which α indicates the phase position of the control signal in relation to the input signal. By e.g. multiplying sinα by cos α, sin 2α or cos 2α functions are obtained which in turn can be multiplied to obtain the function sin 4α corresponding to narrow sensitivity lobes in the transducer's impedance plane, thus permitting effective separation of the various types of vector. The invention thus provides an improved conventional phase-sensitive detector, making it more phase-selective by adding at least one product and/or one quotient former.

FIG.5a

## Method and device for phase-selective testing and/or measuring of test objects with eddy current techniques

The invention relates to a method for phase-selective testing and/or measuring of test objects with eddy current techniques according to the precharacterising part of Claim 1. The invention also refers to a device for carrying out said method.

Conventional equipment and such as described in SE-A-8302738-3 and 8400698-0, usually operate with a simple type of phase-controlled detector. These detectors show maximum sensitivity in one direction-(phase), which is displaced 90° to the direction with minimum sensitivity.

Since, as described in SE-A-8302738-3, various types of vectors often have directions in the impedance plane of the transducer which only differ 15-25° from on another, it is extremely difficult to effectively separate these vectors from each other with conventional detectors, because these detectors are not sufficiently phase-selective.

To facilitate understanding of the following description, a number of abbreviations and terms used will first be defined:

TEST OBJECT will include e.g. wire, rod, billet, sheet, liquid media, etc.

TRANSDUCER shall mean e.g. transducers, sensors, probes, etc. and combinations thereof.

MAGNITUDE shall mean e.g. defect, surface crack, shape, dimension, position, flux, velocity, stress, etc.

Phase-sensitive DETECTOR shall mean e.g.
-phase-controlled rectifier or detector
-phase-sensitive rectifier or detector
-synchronous rectifier or detector, etc.

LO shall mean e.g. lift-off

SPR shall mean e.g. crack

GSK shall mean e.g. oxide scale

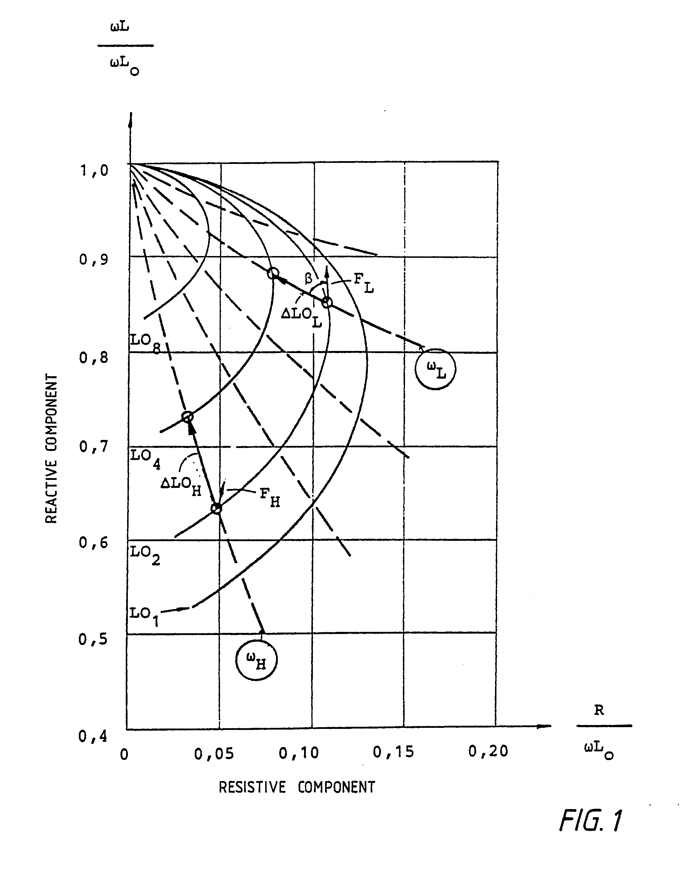

LOB (L) shall mean e.g. the function describing or the curve representing the sensitivity of the detector in different directions in at least one two-dimensional plane, e.g. the impedance plane of a transducer based on the eddy-current principle. Figure 1 shows an example of such an impedance plane. The similarity to the directional action of a radio antenna may be mentioned by way of comparison.

/A/ designates, e.g. the absolute value of the signal or vector A.

$\alpha$ shall mean, inter alia, the angle or phase difference between the control signal and input signal of the detector.

$\beta$ shall mean, inter alia, the angle or phase difference between two vectors.

($\phi$ + 0°) or ($\phi$ + 90°) shall mean, inter alia, that the phase difference between these signals is 90°, and that the signals have a phase difference $\phi$ in relation to another signal, e.g. A sin $\omega$t, which phase difference may be varied. In other words, the signals ($\phi$ + 0°) and ($\phi$ + 90°) have a fixed phase position in relation to each other. At the same time these signals ($\phi$ + 0°) and ($\phi$ + 90°) have phase positions which differ ($\phi$ + 0°) and ($\phi$ + 90°), respectively, from the phase position of e.g. A sin $\omega$t.

DIRECTIONAL DERIVATIVE (dL/d$\phi$) shall mean, inter alia, the derivative of sensitivity as a function of direction. It can be expressed as the sensitivity variation per change of direction.

FREQUENCY/CARRIER FREQUENCY shall usually mean the frequency or the frequencies of the currents with which the transducer is supplied, e.g. $\omega_L$ and $\omega_H$. Frequency also includes a frequency component.

0 282 930

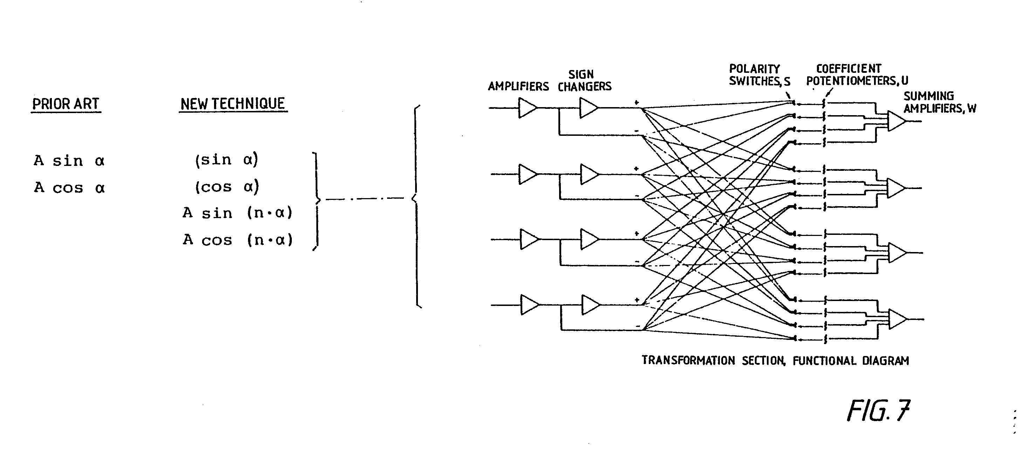

VECTOR TRANSFORMATION shall mean, inter alia, such technology as revealed in Figure 7. This is taken from an article by Hugo L. Libby. Other examples of vector transformation are described in SE-A-7507857-6, 8400698-0 and 8700359-6.

Thus, in this description, transformation or vector transformation shall mean all variants and imaginable combinations of the above-mentioned principle and embodiments.

And/or shall mean that both words can apply simultaneously or individually. A and/or B can thus signify
A, or B, or A and B.

The invention aims at devising a method for phase-selective testing of the above-mentioned kind with markedly enhanced phase discriminating properties. The invention also aims at constructing a device for carrying out this method.

To achieve this aim the invention suggests a method for phase-selective testing according to the introductory part of Claim 1, which is characterized by the features of the characterizing part of Claim 1.

Further developments of the method are characterized by the features of the additional claims 2 to 11.

A device for carrying out the method according to the invention is characterized by the features of claim 12.

According to the invention the improved phase sensitivity of the detector is achieved by additionally adding at least one product and/or quotient former, thus permitting effective separation of the various types of vectors.

Method and device according to the invention function excellently when using only one carrier frequency. However, it is in combination with vector-transformation technique that the invention offers vast improvement over conventional technology.

The embodiments of the invention described in the following shall be considered as examples only of many feasible embodiments. Innumerable applications are also possible. The Figures do not lay claim to being drawn to scale and shall only be considered as diagrammatic sketches.

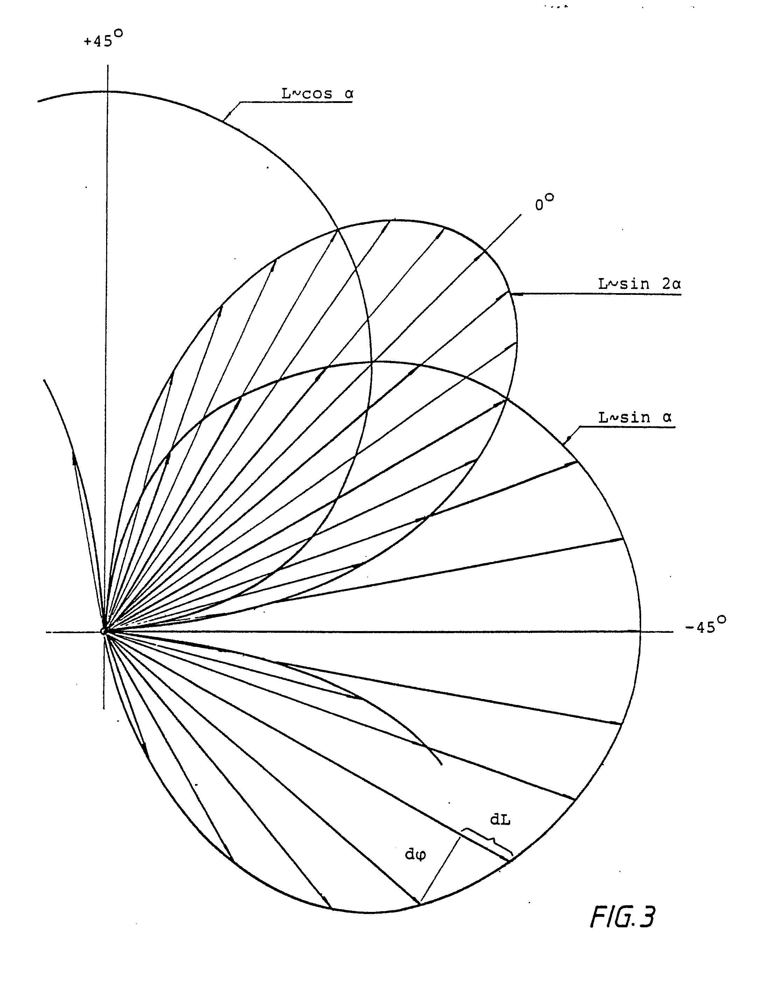

As can be seen from SE-A-8302738-3, the angle between the LO-vector and an error vector, e.g. $F_L$, is in the order of 15-25° at normal frequencies. Particularly at slightly higher frequencies the GSK vectors tend to approach both ●PR and LO vectors. Consequently it is difficult, in some cases impossible, to separate such vectors from each other with conventional phase-discrimination technique based on the use of only simple phase-sensitive detectors. The sensitivity lobes of these conventional devices correspond to e.g. sin and cos in Figure 3.

The invention will now be described in greater detail with reference to the accompanying drawings showing - by way of example - in

Figure 1 an impedance diagram,
Figure 2 the output function from the phase-controlled detectors,
Figures 3 and 4 sensitivity lobes,
Figures 5a and 5b two embodiments of the invention,
Figure 6 a further embodiment of the invention,
Figure 7 vector transformation,
Figure 8 a detail of Figure 1.

Figure 1 shows the impedance diagram for a surface transducer coil supplied with alternating current the magnetic field of which generates eddy currents in the test object. Figure 1 is described in detail in SE-A-8302738-3 from which the figure is taken.

Terminology and designations are also applicable in the present description. However, $\alpha$ has been altered to $\beta$ to avoid confusion with other designations.

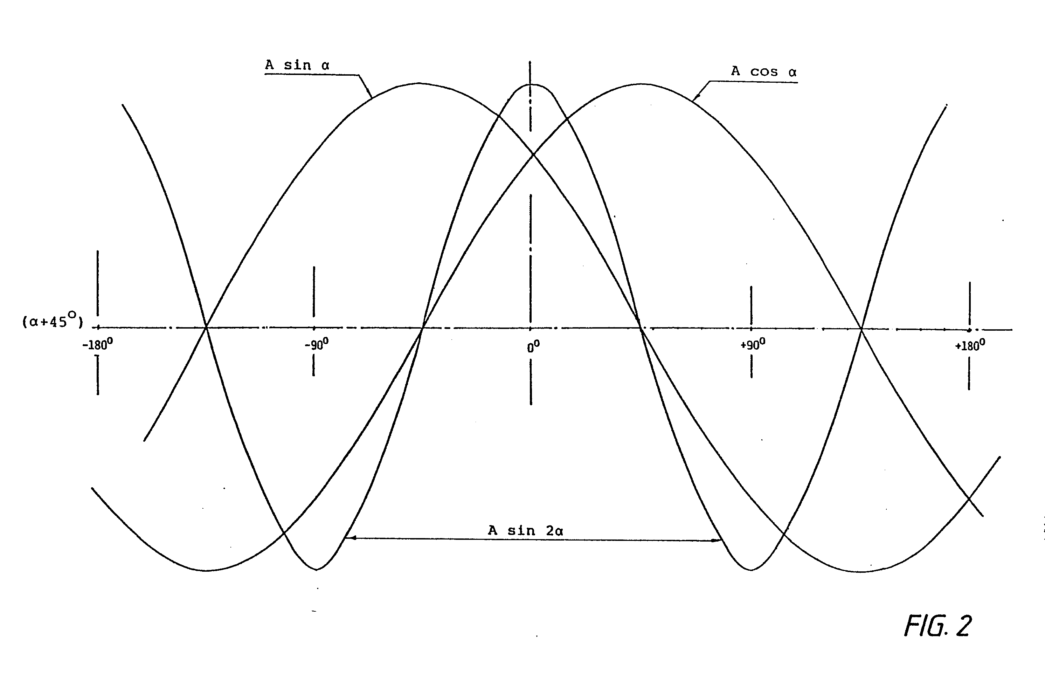

Figure 2 shows two output functions A sin $\alpha$ and A cos $\alpha$ from phase-controlled detectors with their control phases displaced by 90° in relation to each other, and a third function A sin $2\alpha$ obtained by forming the product of the first two functions. The functions sin $\alpha$ and cos $\alpha$, respectively, show the output signal as a function of phase position of the control signal in relation to the input signal. The angle $\alpha$ may be considered here as the phase position of the control signal of the detector in relation to the phase position of the input signal (A sin $\omega$t) of the detector. The angle $\alpha$ corresponds to a certain direction in the impedance plane in Figure 1.

Whether a signal shall be considered as a sin or a cos signal is dependent on which phase angle is used as reference position/phase.

Figure 3 shows sensitivity lobes or simpler lobes (L) pertaining to the function in Figure 2.

Since correspondence to $\alpha$ exists in Figure 1, these lobes can be placed in Figure 1. The vectors in Figure 1 can then be detected by the device or a part thereof, with a sensitivity which is entirely or to a

3

certain extent determined by the extension of the lobe in the relevant direction. The lobes L in Figure 3 are proportional to the functions sin $\alpha$, cos $\alpha$ and sin 2$\alpha$.

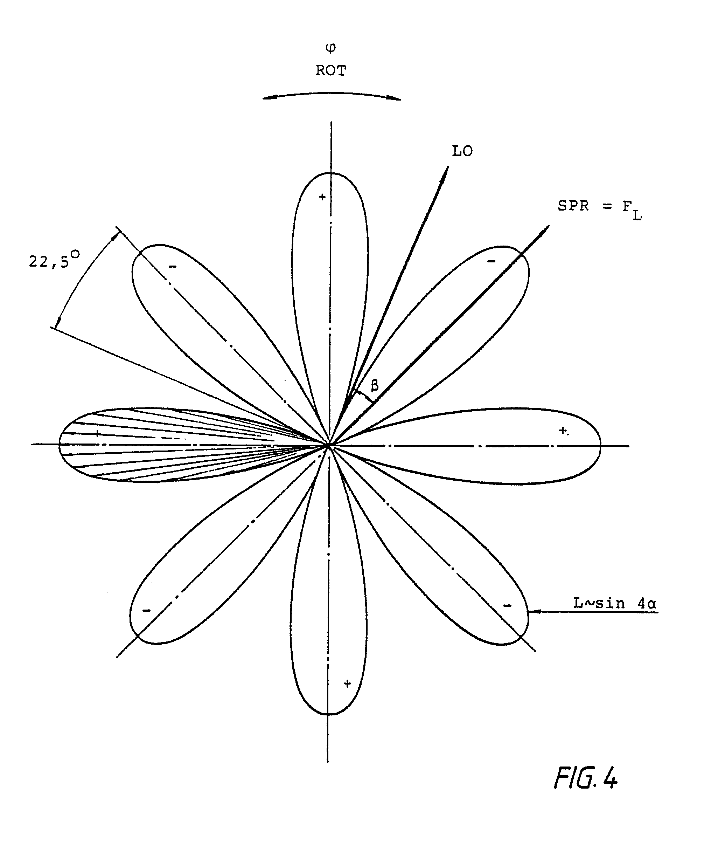

Figure 4 shows lobes corresponding to the function sin 4$\alpha$, i.e. they are narrower and thus more selective. The figure also shows that the lobes can be turned or rotated (ROT) in relation to the vectors LO and SPR. The lobes are alternately positive and negative.

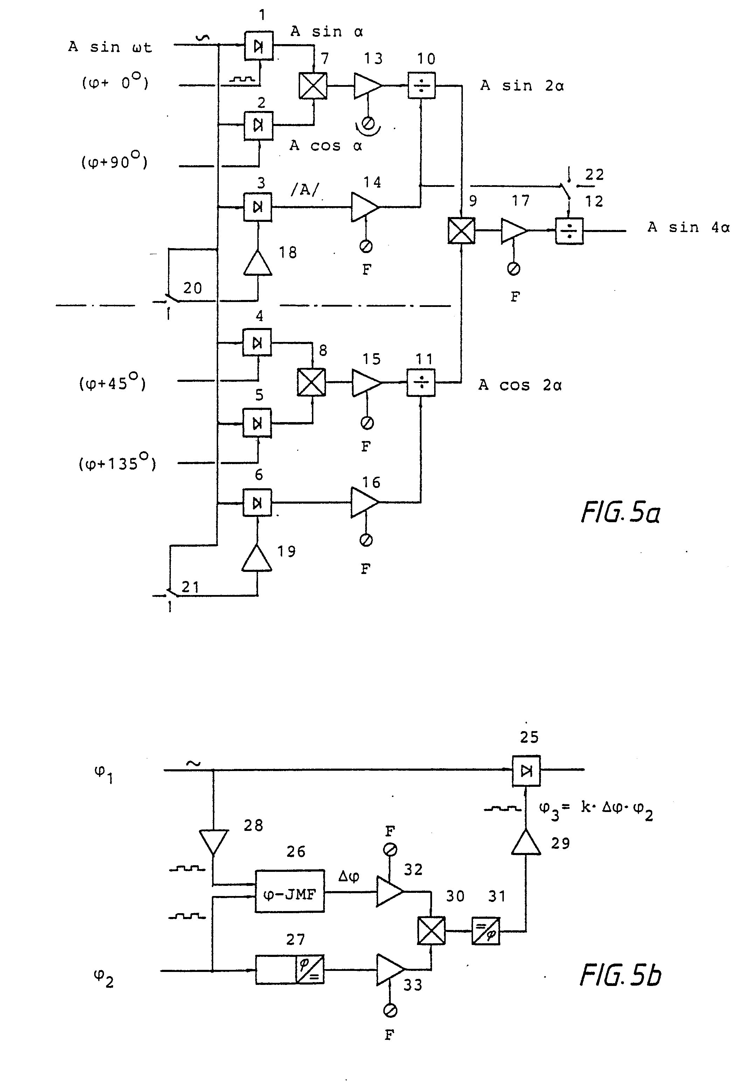

Figure 5a and b show two different embodiments according to the invention, where the phase-discrimination technique is further developed via product and quotient formation.

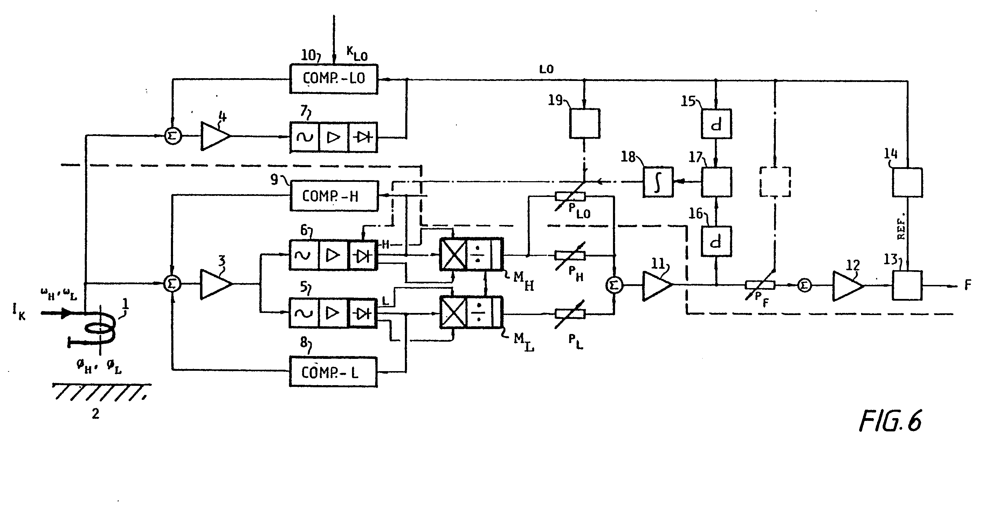

Figure 6 shows one of many examples of how a device according to the invention may be constructed. Figure 6 is taken from SE-A-8400698-0 where it is included as Figure 3. The reference numerals therefore refer to the description in 8400698-0. To Figure 6 have been added blocks according to Figure 5a, these being indicated by heavier lines in Figure 6 and designated $M_H$ and $M_L$, respectively, thus revealing the characteristic features of the present invention.

Note, however, that here there are two blocks, each of which corresponds to Figure 5a, with input signals of different frequencies, e.g. $A_1$ sin $\omega_H t$ and $A_2$ sin $\omega_L t$, respectively. The number of detectors/rectifiers in Figure 6 has, for instance, been increased to three per channel. The output signals from these supply the product and quotient blocks, $M_H$ and $M_L$. The blocks $M_H$ and $M_L$ then supply the subsequent transformation circuits, which may also be designed as shown in Figure 7. Note also the cross-connection between $M_H$ and $M_L$ showing that e.g. products can be formed having different carrier-frequency origin.

Figure 7 shows a simplified diagram of how a vector transformer can be performed. The input signals here consisted previously of sin $\alpha$ and cos $\alpha$ -terms from simple phase-controlled rectifiers. According to the present invention, these functions are supplemented or replaced by sin $n\alpha$ and/or cos $n\alpha$, terms in which n can be any number.

By way of example, the input signals may refer to sin $\alpha$, sin 2$\alpha$, sin 4$\alpha$, cos $\alpha$, cos 2$\alpha$ and cos 4$\alpha$, etc. As will be appreciated, the variations are almost unlimited.

Both in the known technology and in the new technology according to the invention, the sin and cos terms may derive from different carrier frequencies or combinations thereof.

The figures are merely symbolical to illustrate the principle of the invention. Obvious coefficients and so on have therefore been omitted to facilitate understanding of the figures and text.

Combined with vector transformation and dynamic transformation as defined in SE-A-8400698-0, the invention offers unique possibilities and properties included in the present invention in their more sophisticated form.

If two simple phase-sensitive detectors, e.g. 1 and 2 in Figure 5, are supplied with control signals ($\phi$ + 0°) and ($\phi$ + 90°), respectively, it is known that the following functions can be obtained: A sin$\alpha$ and A cos$\alpha$, respectively. These functions can be seen in Figure 2. It should be mentioned that the phase angle between the two functions need not be 90° and was selected primarily because it is rewarding to work with. From the simple trigonometric formula

$$\sin 2\alpha = 2 \sin \alpha \cos \alpha \qquad (1)$$

it is found that, multiplication of the sin and cos terms gives a function sin 2$\alpha$. This can also be seen in Figure 2. It is easily understood here that the function sin 2$\alpha$ is considerably more phase-selective than sin $\alpha$, because of its larger derivative for phase-alterations in e.g. the signal A sin $\omega t$. This is clear from Figure 3 where the lobes for sin $\alpha$ and cos $\alpha$, respectively, can be compared with the narrower lobe for sin 2$\alpha$, which is always more phase-selective. In other words, with the aid of e.g. the multiplicator 7 in Figure 5, a better, more directionally selective, sensitivity function can be obtained.

Since the signal to the detectors in Figure 5 derives from a magnitude it can be written e.g. as A sin $\omega t$ where /A/ constitutes the amount. This means that it may be advisable to also take into consideration the influence of the amount on product formation since, of course,

$$A \sin \alpha \; A \cos \alpha = A^2/2 \sin 2\alpha \qquad (2)$$

Items 3 and 6 in figure 5a are therefore connected as amount-sensing, i.e. amplitude-sensing detectors, and are thus not dependent on direction, since the comparators 18 and 19 have inputs connected to the input signals of the detectors, i.e. to the signal A sin $\omega t$. The output signal from detector 3 thus corresponds to amount /A/ of A. By dividing $A^2/2$ sin 2$\alpha$ by /A/ in the quotient former 10, a function A sin 2$\alpha$ is obtained, as can be seen in Figure 2. If $A^2$ were retained instead of A as now, an exponential response would be obtained which is not always so simple to deal with. Quotient forming thus allows the amount to be retained in spite of product formation.

It can also be seen in Figure 5a that the detectors 1,2 and 3, the multiplicator 7 and the quotient former 10 can be considered as channel 1, and the other/lower part as channel 2. Channels 1 and 2 are identical except that the control signals differ 45° between the channels. Due to the product formation, this difference is doubled from 45° to 90°, and sin and cos terms are again obtained, namely A sin 2$\alpha$ and A cos 2$\alpha$ respectively.

These functions can then be multiplied in the multiplicator 9, the function A sin 4$\alpha$ thus being obtained after a new quotient formation in the quotient former 12. The function A sin 4$\alpha$ is shown in lobe form in Figure 4. The angle between maximal and minimal sensitivity is here 22.5°, which is extremely advantageous since this angle corresponds to the angle between the LO vector and the SPR vector.

Thus the LO vector can be efficiently suppressed and the SPR vector maximally detected.

To get the LO vector to fall between two adjacent lobes, the lobe picture can be turned in relation to the vectors. This turning movement or rotation (ROT) can easily be obtained by varying $\phi$ in Figure 5a. If desired, turning can be performed automatically while e.g. the LO vector is monitored. The rotation will be automatically stopped when the LO vector becomes minimal, which means that the LO suppression has been optimized.

Note that it is primarily a suppression that is sought and that it is sufficient if the SPR vector falls within the part of the lobe which has relatively great sensitivity. The SPR vector need not necessarily fall exactly on the normal mid-line of the lobe.

If desired, the function A sin 4$\alpha$ may further be used to the generate A sin 8$\alpha$, etc.

Similarly, the control signals of the two channels in Figure 5a may be allowed to differ by a value other than 45°, thus generating e.g. more irregular lobes and lobe pattern. The possibilities are thus almost unlimited.

One consequence of the narrow lobes, enabling separation of vectors differing by a small angle ($\beta$) is a dramatic improvement in the criteria for effective vector transformation. Several frequencies, e.g. $\omega_L$ and $\omega_H$, can then be used and, if advantageous, products can be formed from signals having different carrier-frequency origin.

It is also possible to combine different lobes, for instance, and block others, so that e.g. only the lobes in one quadrant are active. The same effect can be achieved by making use of the polarity of each lobe. The "petals" not desired in the "flower" in Figure 4 can thus be removed, retaining only those which are of value to the vector separation, for instance.

The invention is also suitable to combine or supplement the simulated transducer and transducer movement described in SE-A-8700472-7.

In its purest form the invention may be considered to be characterized in that lobes are generated as functions of product and/or quotient forming. The lobes, as well as the multiplicators, may be of direct or indirect type. By "indirect type" is meant that e.g. product forming occurs with different circuits, i.e. a kind of detour where the function can be equated with a multiplicator in some form. Both product and quotient forming may include non-linear functions and equations.

In conclusion, Figure 5a may be considered as an example of how the invention, somewhat simplified, can be realized starting with simple trigonometric equations, often offering symmetrical lobes which are easy to adapt to relevant vectors and vector types. The signal A sin $\omega$t in Figure 5a may be the same or similar to the signals from function block 3 in Figure 3 of SE-A-8400698-0. Function blocks 5 and 6 in the same figure are preferably replaced by circuits according to Figure 5a in the present description.

Figure 5b describes a slightly different detector device. The input signal to detector 25 is here designated $\phi_1$, which should be considered as a phase value. A reference phase is designated $\phi_2$ and the control signal/phase to the detector is designated $\phi_3$.

The converter 28 converts the input signals $\phi_1$ to a square-shaped signal which is compared with $\phi_2$ in the phase-angle comparator 26. The output signal from this comparator 26 thus gives the phase difference between $\phi_1$ and $\phi_2$, in other words $\Delta\phi = \phi_1 - \phi_2$. The signal $\Delta\phi$ is provided with a suitable coefficient in amplifier 32 before being used as one of the input signals to the multiplicator 30. The signal $\phi_2$ is converted in the function block 27 to a direct voltage signal which is provided with a suitable coefficient in amplifier 33, the output signal from this amplifier constituting the other input signal to the multiplicator. At 31 the product output signal from multiplier 30 is again converted to a phase signal which is amplified/pulse-formed in the comparator 29, the output signal from this comparator being $\phi_3$. $\phi_3$ is thus the result of a product formation and $\phi_3 = k \Delta\phi \phi_2$, where k is a selected constant. The control signal $\phi_3$ thus varies in phase in proportion to the product k $\Delta\phi \phi_2$. The result is that the output signal from the detector at 25 will be much greater than the $\Delta\phi$-change in $\phi_1$ itself would have warranted.

Here, too, the result is that, due to the product formation, an amplified directional derivative (dL/d$\phi$) is obtained. However, an arrangement according to Figure 5b will give a lobe picture different from that created by the arrangement according to Figure 5a. Both variants, however, have their advantages.

Obviously in principle any trigonometric formula containing a product or a quotient may be used within the scope of the invention and will in all likelihood give rise to its specific lobe picture and pattern.

The product formers may consist, e.g. of hardware-based multiplicators, software-based computers, balanced modula tors, log-antilog-amplifiers, etc. within the scope of the invention.

The following list shows the significance of the designations in Figures 5a and 5b.

| Item | Types |
|------|-------|
| 1,2,4,5 | Phase-sensitive detector |
| 3,6 | Phase-sensitive detector connected to amount-sensing detector |
| 7,8,9 | Product former, e.g. multiplicator |
| 10,11,12 | Quotient former |
| 13,14,15,16,17 | gain-variable amplifier |
| 18,19 | Pulse former, e.g. comparator |
| 20,21,22 | Converter, selection of denominator type |
| 25 | Phase-sensitive detector |
| 26 | Phase comparator |
| 27 | Phase to DC converter |
| 28,29 | Pulse former, e.g. comparator |
| 30 | Product former, e.g. multiplicator |
| 31 | DC to phase-converter |
| 32,33 | gain-variable amplifier. |

From the description and this list, it is easy to understand the function of the invention in principle. However, it should be observed that hierarchical networks of a complex nature can be constructed using Figures 5a and 5b and their constituent parts.

All imaginable networks and combinations are of course covered by the invention. Similarly, such embodiments are also included where varying carrier frequencies are used. The varying frequency can then be seen as a different way of expressing the phase measurement/discrimination described in this invention, but comprises in principle the same information. Product formation and/or quotient formation based on frequency variation is thus included in the invention.

The product formation can be performed with either analog or digital signals or measured values depending on which is considered most suitable.

It should again be emphasized that the lobes in Figures 3 and 4 can refer to the impedance diagram in Figure 1. The centre of the lobes is then suitably placed to coincide with the working point in the impedance plane. There is nothing to prevent the lobes from having different appearances at different frequencies. If the lobes derive from several frequencies, this must of course be taken into consideration.

To summarize, the invention may be described as a method and/or means for testing and/or measuring test objects with respect to magnitudes comprising the use of at least one transducer and including at least one detector to detect at least one signal deriving directly or indirectly, entirely or partly from transducers, and at least one function or part-device to produce a product and/or quotient of signals and/or measured values entirely or partially deriving directly or indirectly from transducers, and then of course indirectly also from the test object and/or magnitude, and characterized in that the directional derivative ($dL/d\phi$ of at least one of the sensitivity lobes (L) of the device, is entirely or partially a function of the forming of product and/or quotient so that e.g. the criteria for effective phase discrimination is essentially improved. Although the invention functions excellently at one carrier frequency, it is in combination with vector-transformation technique that the invention offers vast improvement over conventional technology.

The following is a variant covered by the invention.

If a vector such as $F_L$ in Figure 1 is taken, and the quotient of its projections on the horizontal and vertical axes, respectively, is formed, this will give a measurement of the direction of the vector. Other projection axes can also be used as a reference if suitable. Comparing the quotient value with predetermined quotient-value limits or functions will give an extremely phase-selective detection.

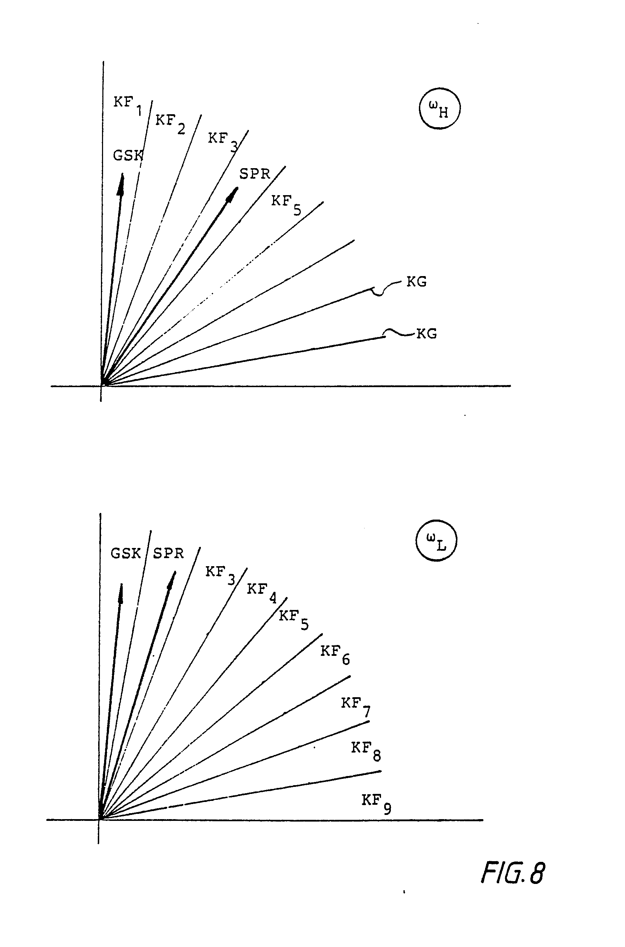

Quotient limits (KG) have been inserted in Figure 8 and shall be considered as being included in Figure 1. It is seen that the SPR vector falls within different quotient fields (KF), and the crack thus fulfills the condition $KF_{4H}$ and $KF_{2L}$, which can then be used for classification, separation, etc. The criterium for GSK vectors can be set to $KF_{1K}$ and $KF_{1L}$ in a corresponding manner.

If a graphic display is used, the quotient limits can even be inserted on the screen.

As is evident, forming a quotient of the vector projections gives an extremely effective starting point for effective and selective detecting.

If the quotient values in analog or digital form are included as input signals in condition circuits or condition functions, for instance, a simple device with sophisticated properties is obtained.

In Figure 8 the upper and lower part-figures refer to different carrier frequencies, as marked in the figure. It may be said here that the sensitivity derivative is a step function, as a function of the quotient formation.

Note that both the SPR and the GSK vectors may consists of a point-formed value in Figure 8 which need not then contain any information other than direction, i.e. phase angle.

One can go a step further and provide a video display unit with a covering sheet having a window for the relevant quotient field, thus making off disturbances. Sensors may also be placed over selected portions of the display, and the output signals from these be used as input signals for simple condition circuits, the output signals of which can be used in many ways, e.g. as blocking or separation signals for the amounts of relevant vectors.

Figure 8 refers to Figure 1 and the quotient field (KF) can in reality consist of the quotient values of e.g. voltages within a voltage interval.

The method of the invention is also characterized in that the lobes are turned, momentarily or continuously, in relation to relevant vectors in the impedance diagram, this being achieved by altering the setting to a phase-generating part of the device, e.g. so that $\phi$ in Figure 5a is varied.

SE-A-351,493 describes a device for increasing phase-selectivity via frequency duplication. That device differs essentially from the present invention, but has the same basic idea of improving the conventional synchronous detector with the aid of supplementary circuits and functions.

The invention can be varied in many ways within the scope of the following claims.

## Claims

1. Method for phase-selective testing and/or measuring of test objects, such as hot steel billets, with eddy current techniques with respect to surface cracks or other magnitudes, whereby at least one signal, e.g. A sin $\omega$t, derived from this magnitude is detected by means of at least one phase-sensitive detector , and a product or quotient of signals or measured values derived from said phase-sensitive detector is produced by means of at least one part-device, such as a multiplicator, to , **characterized** in that at least one of the signals obtained from the detector is subjected to a vector transformation in order to separate different types of vectors.

2. Method according to Claim 1, **characterized** in that it is used together with and/or included in methods for vector transformation.

3. Method according to Claim 1 or 2 , **characterized** in that the number of sensitivity lobes (L) used for the at least one detector is greater than two.

4. Method according to any of the preceding claims, **characterized** in that the lobes can be rotated (ROT) in relation to the vector.

5. Method according to any of the preceding claims, **characterized** in that the lobes are rotated in relation to the relevant vector/signal to be suppressed, e.g. LO or GSK, so that this falls between two adjacent lobes where sensitivity is low or zero.

6. Method according to any of the preceding claims, **characterized** in that the control signals of at least two phase-sensitive detectors are substantially displaced in relation to each other by N $\times$ 45°, where N represents an integer.

7. Method according to any of the preceding claims, **characterized** in that a quotient is formed with the signal quantity (/A/) being included as denominator or a part thereof.

8. Method according to any of the preceding claims, **characterized** in that at least two products and/or quotients are formed, entirely or partially, in series e.g. via two multiplicators (7,9) in the same chain.

9. Method according to any of the preceding claims, **characterized** in that product formation and/or quotient formation is effected by means of signals having different carrier-frequency origin $\omega_L$, $\omega_H$).

10. Method according to any of the preceding claims, **characterized** in that the control signal ($\phi_3$) to at least one detector (25) is varied as a function of the phase alteration ($\Delta\phi$) of signals which directly or indirectly and entirely or partially are derived from transducer and/or test object.

11. Method according to any of the preceding claims, **characterized** in that at least one lobe is a function of the phase angle and/or phase-angle alteration, $\alpha$ and $\Delta\phi$, respectively, of at least one carrier frequency, and that the lobe function, entirely or partially can be described as sin n $\alpha$ and/or cos n $\alpha$ and/or combinations thereof, where n is a number other than one.

12. Device for carrying out the method according to any of the preceding claims according to any of the preceding Claims, comprising at least one phase-sensitive detector (1), e.g. a synchronous detector, to detect e.g. rectification of at least one signal, e.g. A sin ωt, derived from this magnitude, and at least one part-device, such as a multiplicator, to produce a product or quotient of signals or measured values derived from said phase-sensitive detector, **characterized** in that at least one of the signals obtained from the detector is supplied to a part-device for vector transformation in order to separate said different types of vectors.

*FIG. 1*

FIG. 2

0 282 930

March 7, 1988
21 998 PE

FIG.3

FIG. 4

A sin ωt

(φ+ 0°)

A sin α

A cos α

/A/

A sin 2α

A sin 4α

(φ+90°)

(φ+45°)

(φ+135°)

A cos 2α

F

F

F

F

F

*FIG.5a*

φ₁

$\varphi_3 = k \cdot \Delta\varphi \cdot \varphi_2$

φ-JMF

Δφ

F

φ₂

*FIG.5b*

F

March 7, 1988
21 998 PE

FIG.6

## PRIOR ART

A sin $\alpha$

A cos $\alpha$

## NEW TECHNIQUE

(sin $\alpha$)

(cos $\alpha$)

A sin (n·$\alpha$)

A cos (n·$\alpha$)

TRANSFORMATION SECTION, FUNCTIONAL DIAGRAM

FIG. 7

0 282 930

March 7, 1988
21 998 PE

FIG.8